**Europäisches Patentamt**

(19) **European Patent Office**

**Office européen des brevets**

(11) Veröffentlichungsnummer: **0 061 627**
**B1**

(12) EUROPÄISCHE PATENTSCHRIFT

(45) Veröffentlichungstag der Patentschrift:
26.02.86

(21) Anmeldenummer: **82102026.0**

(22) Anmeldetag: **13.03.82**

(51) Int. Cl.⁴: **C 08 G 18/83,** C 08 G 18/63,
C 08 G 18/50, C 08 G 18/10

(54) **Polymerisathaltige Polyetherpolyamine, Verfahren zur Herstellung dieser Polyamine und deren Verwendung als Aufbaukomponente zur Herstellung von Polyurethanen.**

(30) Priorität: **27.03.81 DE 3112118**

(43) Veröffentlichungstag der Anmeldung:
**06.10.82 Patentblatt 82/40**

(45) Bekanntmachung des Hinweises auf die Patenterteilung:
**26.02.86 Patentblatt 86/9**

(84) Benannte Vertragsstaaten:
**BE DE FR GB IT**

(56) Entgegenhaltungen:
**DE - A - 2 948 419**
**FR - A - 1 415 317**

(73) Patentinhaber: **BAYER AG, Konzernverwaltung RP**
**Patentabteilung, D-5090 Leverkusen 1 Bayerwerk (DE)**

(72) Erfinder: **Rasshofer, Werner, Dr., Wolfskaul 10,**
**D-5000 Köln 80 (DE)**
Erfinder: **Ballé, Gerhard, Dr., Nietzschestrasse 14,**
**D-5090 Leverkusen 1 (DE)**
Erfinder: **Dieterich, Dieter, Dr., Ludwig-Girtler-Strasse 1,**
**D-5090 Leverkusen 1 (DE)**
Erfinder: **Meyborg, Holger, Dr.,**
**Bergisch-Gladbacher-Strasse 1, D-5068 Odenthal (DE)**

## Beschreibung

Die Erfindung betrifft neue, Urethangruppen enthaltende Polyamine auf Polyetherbasis, welche Polymerisate und/oder Copolymerisate ungesättigter Verbindungen, vorzugsweise als Pfropfpolymerisate, sowie gegebenenfalls Harnstoff- und/oder Biuret- und/oder Allophanat-Gruppen enthalten, ein Verfahren zu ihrer Herstellung durch Tydrolyse von endständige Isocyanatgruppen aufweisenden NCO-Präpolymeren sowie ein Verfahren zur Herstellung von Polyurethanen unter Verwendung dieser Polymer-Polyetherpolyamine.

Urethangruppenhaltige Polyamine sind bekannt. So wird in der DE-AS 1 270 046 ein Verfahren zur Herstellung definierter, Polvalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern mit sekundären oder tertiären Carbinolen umsetzt und anschließend (gegebenenfalls in Gegenwart saurer Katalysatoren) in einem inerten Lösungsmittel einer thermischen Spaltung unterwirft. Nachteilig ist dabei, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-AS 1 694 152 ist die Herstellung von mindestens zwei endständigen Aminogruppen aufweisenden Präpolymeren durch Umsetzung von Hydrazin, Aminophenylethylamin oder anderen Diaminen mit einem NCO-Präpolymer aus einem Polyetherpolyol und Polyisocyanat (NCO/ NH-Verhältnis = 1:1,5 bis 1:5). Nicht-umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Präpolymere werden mit Ameisensäure in die N-Formylderivate überführt, die zu endständigen aromatischen Aminen verseift werden. Auch die Reaktion von NCO-Präpolymeren mit Sulfaminsäure gemäß DE-AS 1 155 907 führt zu Verbindungen mit endständigen Aminogruppen. Desweiteren werden höhermolekulare, aliphatische, sekundäre und primäre Aminogruppen aufweisende Voraddukte nach DE-AS 1 215 373 durch Um: setzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxyiverbindungen mit Acrylnitril unter anschließender katalytischer Hydrierung. Auch durch Umsetzung von NCO-Präpolymeren mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen und Urethangruppen aufweisende Verbindungen.

Es ist bekannt, daß aromatische Isocyanate durch saure Hydrolyse in primäre Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel findet sich in der JP-PS 55007-825.

Es ist bekannt, daß Polyurethane, die unter Verwendung von sogenannten Polymerpolyolen, die durch Polymerisate oder Copolymerisate olefinisch ungesättigter Monomerer pfropfmodifizierte Polyetherpolyole darstellen, hergegestellt werden, sich durch ein verbessertes Eigenschaftsniveau auszeichnen. Insbesondere wird die Härte und Tragfähigkeit von PU-Weichschaumstoffen günstig beeinflußt, so daß niedrigere Raumgewichte eingestellt und Rohmaterialeinsparungen erzielt werden können.

Darüber hinaus verleihen diese Polymerpolyole Weichschaumstoffen eine größere Offenzelligkeit und wirken dadurch einer Schrumpfung der frischen Schaumstoffe bei der Lagerung entgegen. Schließlich lassen sich mit Hilfe der Polymerpolyole (bei geeigneter Auswahl des Basispolyethers) sogenannte hochelastische, kalthärtende Schaumstoffe herstellen, wobei - im Gegensatz zu konventionellen Verfahren zur Herstellung derartiger Schaumstoffe - keine speziellen Polyisocyanate mit abgestimmter Reaktivität benötigt werden, sondern marktgängige Standardprodukte, insbesondere das bei der Weichschaumherstellung überwiegend verwendete Toluvlendiisocyanat eingesetzt werden können.

Aufgabe der Erfindung war es nun, ein Verfahren zur Herstellung von Urethangruppen enthaltenden Polyaminen auf Polyetherbasis, welche auf die Polyether gepfropfte Polymerisate oder Copolymerisate ungesättigter Verbindungen, sowie gegebenenfalls Harnstoff- und/oder Biuret- und/oder Allophanat-Gruppen enthalten, zu entwickeln. Derartige Verbindungen werden in der Folge auch abgekürzt als 'Polymer-polyetherpolyamine'' bezeichnet.

Überraschenderweise wurde gefunden, daß man solche 'Polymer-Polyetherpolyamine'' direkt erhält, wenn man entsprechende NCO-Präpolymere in überschüssige wäßrige Alkalilauge eintropft, die entstandenen Alkalicarbamate mit saurem Ionenaustauscher behandelt und somit die NCO-Gruppen in unerwartet glatter und verfahrenstechnisch einfacher Weise in Aminogruppen überführt.

Gegenstand der Erfindung ist somit ein Verfahren zur Herstellung von Urethangruppen enthaltenden Polymer- Polyetherpolyaminen auf Polyalkylenetherbasis, welche Polymerisate und/oder Copolymerisate ungesättigter Monomerer, sowie gegebenenfalls Harnstoff- und/oder Biuret- und/oder Allophanat-Gruppen enthalten, durch Hydrolyse von endständige NCO-Gruppen aufweisenden Präpolymeren, dadurch gekennzeichnet, daß man

a) in einem ersten Schritt Urethangruppenhaltige NCO-Präpolymere, erhalten durch Reaktion von

α) 2- oder mehrwertigen PolyalkylenetherPolyolen mit einem Molekulargewicht von 1000 bis 10 000, vorzugsweise 2000 bis 6000, welche 1 bis 60 Gew.-%, vorzugsweise 5 bis 40 Gew.-%, besonders bevorzugt 10 bis 30 Gew.-% Polymerisate und/oder Copolymerisate ungesättigter Monomerer aufgepfropft enthalten und gegebenenfalls Harnstoff-, Biuret- und/oder Allophanatgruppen aufweisen und gegebenenfalls

β) niedermolekularen Kettenverlängerungsmitteln vom Molekulargewicht 18 bis 400, mit

ψ) überschüssigen molaren Mengen an organischen Polyisocyanaten,

in wäßriger Dispersion, gegebenenfalls in Gegenwart inerter, mit Wasser mischbarer organischer Lösungsmittel,

bei einer Temperatur von 0 bis 40°, bevorzugt 10 bis 25°C,

durch Eintragen in ein alkalisches wäßriges Medium, wobei das Äquivalentverhältnis zwischen OH -Gruppen und NCO-Gruppen größer 1,01:1 ist, in das entsprechende Carbamat überführt,

b) das Carbamat in einem zweiten Schritt durch Zusatz einer äquivalenten oder überschüssigen Menge eines sauren Ionenaustauschers unter Abspaltung von Kohlendioxid in das Amin überführt, und

c) das so erhaltene, Urethangruppen-haltige Polymer-Polyetherpolyamin aus dem Reaktionsgemisch auf an sich bekannte Weise abtrennt.

Gegenstand der Erfindung sind auch durch Hydrolyse entsprechender NCO-Präpolymerer erhaltene Urethangruppennaltige Polyamine mit aliphatischen und/oder aromatischen Aminogruppen auf Polyalkylenetherbasis, welche im wesentlichen Pfropfpolymerisate oder -copolymerisate ungesättigter Monomerer, sowie gegebenenfalis Harnstoffund/oder Biuret- und/oder Allophanatgruppen enthalten.

Diese 'Polymer-Polyetherpolyamine" sind auf der Basis von Polyalkylenetherpolyol-resten vom Molekulargewicht 1000 bis 10 000, vorzugsweise 2000 bis 6000, welche Polymerisate und/oder Copolymerisate ungesättigter Verbindungen in Mengen von 1 bis 60 Gew.-%, vorzugsweise 5 bis 40 Gew.-%, besonders bevorzugt 10 bis 30 Gew.-% aufgepfropft enthalten und die endständigen Aminogruppen über die Reste des Polyisocyanats durch Urethangruppen an die Polyether gebunden haben, aufgebaut.

Dabei beträgt der Gehait der 'Polymer-Polyetherpolyamine" bei einer Funktionaiität zwischen 2 und 3 zwischen 2,9 und 0,11 Gew.-%, bevorzugt zwischen 1,7 und 0,18 Gew.-% an freien NH -Gruppen. Der Polymerisatanteil in den Polymerpolyetherpolyaminen beträgt entsprechend zwischen 0,65 und 59,3 Gew.-%, vorzugsweise 0,8 bis 59 Gew.-% und besonders bevorzugt zwischen 9,35 und 28 Gew.-%.

Die Aminogruppen können an aliphatische, cycloaliphatische oder bevorzugt aromatische Reste gebunden sein - entsprechend ihrer Herkunft von aliphatischen, cycloaliphatischen oder aromatischen Polyisocyanaten bei der Präpolymerherstellung mit den 'Polymer-Polyoien".

Diese Reste der Isocyanate sind über Urethangruppen mit den Polymerisate aufweisenden Polyetherpolyolresten (entstanden aus Polyolen und Isocyanaten) verknüpft.

Insoweit die NCO-Präpolymeren aus der Verwendung der Ausgangsprodukte oder aus der NCO-Präpolymerbildungsreaktion gegebenenfalls noch Harnstoff-, Biuret- und/ oder Allophanatgruppen enthalten, so sind diese Gruppen in den neuen Polyaminen gleichfalls enthalten, da es sich bei dem erfindungsgemä'en Verfahren um eine schonende Hydroiysereaktion und schonende Produktaufarbeitungsweise handelt.

Gegenstand der Erfindung ist ferner die Verwendung der nach dem erfindungsgemäßen Herstellungsverfahren zugänglichen Urethangruppen-haltigen Polyamine auf Polyalkylenetherbasis, die Pfropfpolymerisate ungesättigter Monomerer und gegebenenfalls Harnstoff- und/oder Biuretund/oder Allophanat-Gruppen enthalten, ais Aufbaukomponente bei der Herstellung von homogenen und/oder zellförmigen Poiyurethan-Kunststoffen und -Schaumstoffen. Diese Verwendung ist beispieisweise gekennzeichnet durch Umsetzung von

A) Polyisocyanaten mit
B) Polyaminen, sowie gegebenenfalls
C) weiteren niedermolekularen und/oder höhermolekularen Verbindungen mit gegenüber Isocyanaten reaktiven Gruppen, gegebenenfalls
D) in Anwesenheit an sich bekannter Hilfs- und Zusatzstoffe,

dadurch gekennzeichnet, daß als Komponente B) die nach dem erfindungsgemäßen Verfahren hergestellten Polymerpolyetherpolyamine eingesetzt werden.

Das vorliegende Verfahren besitzt folgende überraschende Vorteiie:

1. Bei der Herstellung der NCO-Präpolymeren aus Polyisocyanaten und gegenüber NCOreaktiven, R-Atome enthaitenden Verbindungen verbleiben oftmais geringe Anteile an monomeren Isocyanat im Präpolymer. Es hat sich gezeigt, daß im erfindungsgemäßen Verfahren nur die entsprechenden niedermolekuiaren Polyamine mit dem Ionenaustauscher Assoziate ergeben und mit diesem aus dem Reaktionsgemisch entfernt werden können. Überraschenderweise geschieht das jedoch nicht mit den höhermolekularen Polyaminen, so daß nach dem vorliegenden Verfahren höhermolekulare, Polymerisate enthaltende Polyetherpolyamine direkt und nicht über den Umweg mineralsaurer Salze, sowie mit erheblich verbesserter Molekular-Einheitlichkeit zugänglich sind.

2. Es ist gleichermaßen möglich, den Ionenaustauscher zur Carbamatlösung bzw. -suspension zu geben oder das ungekehrte Verfahren zu wählen.

3. Das erfindungsgemäße Verfahren ist sehr schonend und führt dazu, daß die Polyamine, auch solche auf aromatischer Basis, aligemein als farblose bis leicht gelbliche Produkte anfallen und durch die Abwesenheit von Verunreinigungen wesentlich iangsamer oxidieren und verfärben.

4. Mit dem erfindungsgemäßen Verfahren ist eine so schonende Verfahrensweise aufgefunden worden, daß auch die Herstellung von empfindlichen, biuretund/oder allophanatgruppenhaltigen Polyaminen ohne Schwierigkeiten gelingt und somit eine Verbindungskiasse von poiymerisathaltigen Biuret- und/oder Allophanat-Polyaminen nach dem Verfahren zugängiich wird.

Es ist möglich, mehr als die äquivaiente Menge an saurem Ionenaustauscher, bezogen auf die H-Atome zu verwenden, ohne daß die höhermoiekularen Polyamine in die entsprechenden Saize, was einen weiteren Verfahrensschritt unter Anfall von unerwünschtem Salzballast erfordern wurde, übergeführt werden, wie dies der Fall ist, wenn die acidolytische Zersetzung der Carbamate mit überschüssiger Mineralsäure vorgenommen wird.

Zur Herstellung der als Ausgangsstoffe dienenden NCO-Präpolymeren werden erfindungsgemäß 'Polymer-Polyole" eingesetzt, wie sie durch radikalische in-situ-Polymerisation von ungesättigten Verbindungen ("Monomeren") in Gegenwart von 2- und/oder mehrwertigen Polyalkylenoxid-Polyolen (Polyethern) erhalten werden. Man setzt dabei eines oder mehrere Vinylmonomerer, wie z.B. Styrol, Methylstyrol, Acrylnitril, Methacrylnitril, Acrylsäure-alkylester, Methacrylsäure-alkylester und andere bekannte Monomere, gegebenenfalls in modifizierenden Mengen, ein. Bevorzugt werden Styrol, α-Methylstyrol, Acrylnitril und (Meth)acrylsäuremethylester, wobei Copolymere aus Styrol und Acrylnitril besonders bevorzugt sind.

Die Herstellung derartiger, durch Polymerisate oder Copolymerisate modifizierte Polyetherpolyole ist bekannt und ergibt im wesentlichen durch Pfropfreaktionen Polymermodifizierte Polyetherpolyole, doch können daneben auch ungepfropfte Polymerisate in der Mischung mit vorhanden sein. Herstellung und Verwendung solcher Polymer-polyole werden beispielsweise in den US-PS-en 3 304 273 und 2 383 351 sowie in der DE-AS 2 915 260 sowie den DE-PS-en 1 222 660, 1 152 536 und 1 152 537, ferner in dem Artikel von F.E. Critchfield et al, Rubber Chemistry and Technology, 45 (1972), Seite 1467 bis 1481 beschrieben.

Die zur Polymermodifizierung mit Monomeren eingesetzten in der Regel 2 bis 8, vorzugsweise 2 bis 3, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, vorzugsweise von Ethylenoxid oder Propylenoxid, gegebenenfalls im Gemisch in beliebigen Mischungsverhältnissen oder nacheinander an Startkomponenten mit reaktionsfähigen Wasserstoffatomen wie z.B. Wasser, Alkohole, Ammoniak oder Amine, z.B. Ethylenglykol, Propylenglykol-(1,2), Trimethylolpropan, Glycerin, Sorbit, 4,4'-Dihydroxydiphenylpropan, Anilin, Ethanolamin, Diethanolamin, N-Methyl-diethanolamin oder Ethylendiamin, hergestellt. Auch Sucrosepolyether, sowie auf Formit oder Formose gestartete Polyether kommen in Frage. Vielfach sind solche Polyether bevorzugt, die überwiegend (bis 90 Gew.-%, bezogen auf alle vorhandenen OH-Gruppen im Polyether) primäre OH-Gruppen aufweisen. Bevorzugt sind die Polyalkylenoxidpolyole auf Basis Ethylenoxid, Propylenoxid und Tetrahydrofuran.

Das Molekulargewicht der di- und mehrfunktionellen Polyetherpolyole liegt zwischen etwa 1000 und 10 000, vorzugsweise zwischen 2000 und 6000, ihre Funktionalität. vorzugsweise zwischen 2 und 3.

Der Polymerisatgehalt der erfindungsgemäß zur NCO-Präpolymerbildung einzusetzenden Polymer-Polyetherpolyole liegt zwischen 1 und 60 Gew.-% Polymerisat (vorzugsweise in gepfropfter Form), bevorzugt zwischen 5 bis 40 Gew.-% und besonders bevorzugt zwischen 10 und 30 Gew.-%, bezogen auf das Polyether-Polymerisatendprodukt.

Bei der Umsetzung der Polymer-Polyole mit den Polyisocyanaten zum NCO-Präpolymer können in untergeordneten Mengen gegebenenfalls niedermolekulare, H-aktive Verbindungen vom Molekulargewicht 18 bis etwa 400 mitverwendet werden. Diese auch als 'Kettenverlängerungsmittel" bezeichneten Verbindungen kommen dabei in Mengen von weniger als 0,5 Mol, vorzugsweise von 0,01 bis 0,2 Mol pro Mol Polymer-Polyol in Betracht. Geeignet sind hier Wasser, Diole wie Ethylenglykol, 1,2-Propylenglykol, Butandiol-2,3 und/oder -1,4, Neopentylglykol, Isophorondiamin, Neopentyldiamin, Toluylendiamin-2,4 und/oder -2,6 oder Tetraalkyl-dicyclohexylmethan-2,4' und/oder -4,4'-diamine, ferner Polyethylenoxid-, -propylenoxid- oder -tetramethylenoxid-diole mit MolekulargewiChten unter 400.

Durch diese Modifizierung werden gegebenenfalls weitere Urethan- und/oder Harnstoffgruppen, welche auch bei der Umsetzung mit den Polyisocyanaten Allophanat- oder Biuret-Gruppen sich ausbilden lassen, in das NCO-Präpolymer eingebaut.

Als Polyisocyanate kommen von hydrolysierbaren Gruppen (abgesehen von den NCO-Gruppen) freie, aliphatische, cycloaliphatische, araliphatische, aromatische und heterocyclische Polyisocyanate in Frage, wie sie z.B. in der DE-OS 2 854 384 auf den Seiten 8 bis 11 ausführlich aufgeführt werden.

Bevorzugt sind Diisocyanate, z.B. 1,4-Tetramethylendiisocyanat, 1,6-Hexamethylendiisocyanat, 1,12-Dodecandiisocyanat, ferner cycloaliphatische Diisocyanate in beliebigen Mischungen ihrer Stellungs- und/oder Stereoisomeren, z.B. Cyclobutan-1,3-diisocyanat, Cyclohexan-1,3- und -1,4-diisocyanat, 1-Isocyanato-3,3,5-tri-methyl-5-isocyanatomethylcyclohexan, 2,4- und 2,6-Hexahydrotoluylendiisocyanat, Hexahydro-1,3-und/oder -1,4-phenylendiisocyanat, Perhydro-2,4'-und/oder -4,4'-diphenylmethandiisocyanat. Insbesondere sind jedoch aromatische Diisocyanate geeignet, z.B. 1,3- und 1,4-Phenylendiisocyanat, 2,4- und 2,6-Toluylendiisocyanat, sowie beliebige Gemische dieser Isomeren, Di-phenylmethan-2,4'-, -2,2'- und/oder -4,4'-diisocyanat, einschließlich seiner Alkyl- und Chlor-substituierten Derivate und Naphthylen-1,5-diisocyanat. Ferner können beispielsweise Polyphenyl-polymethylen-polyisocyanate, wie sie durch Anilin-Formaldehyd-Kondensation und anschließende Phosgenierung erhalten werden, Isocyanuratgruppen, Urethangruppen, acylierte Harnstoffgruppen, Allophanatgruppen, sowie Biuretgruppen aufweisende Polyisocyanate eingesetzt werden.

Besonders bevorzugt werden Polyisocyanate, welche unterschiedliche Reaktivitäten zwischen ihren NCO-Gruppen aufweisen, z.B. araliphatische Diisocyanate oder aromatische Diisocyanate wie Toluylen-2,4-diisocyanat, Diphenyl-methan-2,4'-diisocyanat, 3',5'-Dimethyl-diphenylmethan-2,4'-diisocyanat, 3',5'-Dimethyl-diphenylmethan-4,4'-diisocyanat oder 3,5-Dimethyl-3',5'-diisopropyl-4,4'-diisocyanat.

Als technisch geeignetes Diisocyanat wird das Toluylen-2,4-diisocyanat vorgezogen.

Die erfindungsgemäß in der Hydrolyse einzusetzenden endständige Isocyanatgruppen aufweisenden NCO-Präpolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 zu 1 und 2,8 zu 1 liegen. Selbstverständlich ist es möglich, einen noch größeren Überschuß an Polyisocyanat, z.B. 10 zu 1 zu verwenden. Man kann gegebenenfalls überschüssiges Polyisocyanat durch Dünnschichten wieder entfernen und erhält so NCO-Voraddukte, welche der Zusammensetzung 2 zu 1 relativ nahe kommen.

Die Voraddukte haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte Voraddukte, während NCO/OH-Verhältnisse von unter 2 eine Erhöhung des mittleren Molekulargewichts der NCO-Voraddukte unter Urethan-Verknüpfung zur Folge haben.

Es ist, wie schon erläutert auch möglich, niedermolekulare Polyole oder andere Kettenverlängerungsmittel bei der Herstellung der Präpolymeren anteilsmäßig in untergeordneten Mengen neben den höhermolekularen Polymerpolyethern mitzuverwenden. In diesem Fall erhält man ebenfalls höhermolekulare Voraddukte.

Verwendet man als Ausgangskomponenten Diamine als Kettenverlängerungsmittel oder benutzt man Harnstoff-haltige, Biuret-haltige oder Allophanat-haltige Polyisocyanate, so sind auch diese Gruppen bereits in die NCO-Präpolymeren eingebaut. Allophanat- und Biuretgruppen können auch durch verschärfte Reaktionsbedingungen aus der Umsetzung von Harnstoff bzw. Urethan-haltigen Präpolymeren sich bilden. Urethangruppen sind in jedem Fall in dem NCO-Präpolymer aus der Verknüpfungsreaktion zwischen Polymerpolyetherpolyol und Polyisocyanat enthalten.

Die beschriebenen NCO-Präpolymeren werden im erfindungs-gemäßen Verfahren zunächst in der Regel in einem mit Wasser mindestens teilweise mischbaren, inerten organischen Lösungsmittel gelöst. Geeignete Solventien sind z.B. Dimethoxyethan (DME), Tetrahydrofuran oder Dioxan. Dabei können auf 100 Teile Lösungsmittel z.B. 1 bis 400 Teile des NCO-Präpolymeren verwendet werden. Das Präpolymer wird zweckmäßig unter Rühren langsam (vorzugsweise binnen 30 bis 120 Minuten) in eine auf ca. 0 bis 40°, vorzugsweise 10 bis 25°C, temperierte Lösung von Alkali- oder Erdalkalihydroxiden in Wasser und/oder einem anderen, mit Wasser mischbaren, keine NCOaktiven Wasserstoffatome enthaltenden Solvens eingetragen, wobei die (Erd)Alkalikonzentration vorzugsweise 1 Gew.-Teil Base auf 2 bis 20 Gew.-Teile Wasser bzw. des obigen Solvens beträgt. Gleichfalls geeignet sind anorganische und organische Ammoniumhydroxide (z.B. Tetraalkylammoniumhydroxid). Bevorzugt werden 5 bis 20 gew.-%ige Alkalihydroxid-Lösungen eingesetzt.

Wird ohne Solvens gearbeitet, so wird das möglichst niedrigviskose (bevorzugt bis ca. 5000 mPas), gegebenenfalls vorher erwärmte (z.B. 30 bis 90°C) NCO-Präpolymer bei hoher Rührgeschwindigkeit möglichst fein verteilt zugegeben (z.B. Einspritzung durch eine Düse unter Druck) und zur Rühr-Erleichterung die vorgelegte Wassermenge gegebenenfalls erhöht (z.B. um den Faktor 1,1-100).

Die (Erd)Alkalihydroxidmenge bzw. die Menge der verwendeten Basen wird so bemessen, daß nach vollständiger Reaktion zumindest noch eine geringe Menge freier Base verbleibt, ein NCO/OH⊖ Ionen-Verhältnis von 1:1,01 bis 1:1,60 und die Verwendung von Alkalihydroxiden wird dabei bevorzugt. Die Restbasenkonzentration darf nicht zu hoch sein, da sonst nach der Bildung des Carbamats im Präpolymer enthaltende Urethangruppierungen gleichfalls hydrolysiert werden. Um die Homogenität der Lösungen zu verbessern, wird vorzugsweise ein handelsüblicher Emulgator in Mengen von 0,1 bis 1 Gew.-Teilen, bevorzugt ca. 0,5 Gew.-Teile (bezogen auf 100 Teile Reaktionsgemisch) zugesetzt. Intensives Rühren ist bei der Vermischung der NCO-Komponente mit der Hydroxidkomponente zu empfehlen, um lokale Konzentrationsungleichgewichte zu vermeiden. Nach der Beendigung der Zugabe des Präpolymeren wird vorzugsweise noch ca. 5 bis 180 Minuten, bevorzugt 10-60 Minuten, bei 0 bis 40°C weitergerührt.

Zur Erniedrigung der Viskosität kann es von Vorteil sein, vor der Behandlung mit dem Ionenaustauscher noch mit einem geeigneten Solvens zu verdünnen. Geeignete Lösungsmittel sind Dioxan, Tetrahydrofuran, Acetonitril, Methanol, Ethanol, i-Propanol. Bevorzugt ist Methanol.

Im zweiten Schritt wird die Carbamat-Lösung bzw. Carbamat-Suspension mit dem Ionenaustauscher vereinigt. Für das erfindungsgemäße Verfahren ist es unwesentlich, ob zur vorgelegten Carbamatsuspension bzw. Carbamatlösung das saure Ionenaustauscherharz zugegeben oder ob umgekehrt vorgegangen wird. Ionenaustauscherharz und Carbamat-Komponente werden in dem Maße miteinander vereinigt, wie es die Heftigkeit der Gasentwicklung und die Dimensionierung der Apparatur zuläßt (1 bis 300 Minuten, bevorzugt 10-90 Minuten).

Diese Gasentwicklung tritt jedoch im allgemeinen erst nach der Zugabe von ca. 1/4 der Gesamtmenge an Ionenaustauscherharz ein. Sie erfolgt jedoch niemals plötzlich und heftig, sondern stetig und ist gut zu kontrollieren.

Bei der Vereinigung der Komponenten tritt geringe oder keine Temperaturerhöhung auf, ein gegebenenfalls durch externes Heizen einzustellender Temperaturbereich von 10 bis 70°C erwies sich als günstig.

Es wird solange Ionenaustauscher zugesetzt, bis keine Gasentwicklung mehr zu erkennen ist. Kurzzeitiges Erwärmen auf 60 bis 100°C treibt gelöstes Kohlendioxid aus.

An saurem Ionenaustauscherharz wird mindestens die zur Neutralisierung der eingesetzten Base nötige Menge verwandt. Im allgemeinen ist jedoch ein kleiner Überschuß an den sauren Ionenaustauscherharz entstammenden Protonen zu verwenden. Pro val Base (als OH) werden im allgemeinen 1.01 - 2 val Wasserstoffionen eingesetzt.

Das umgekehrte Verfahren - Ionenaustauscher vorgelegt ist v.a. dann zu bevorzugen, wenn die Reaktionsdaten bekannt sind, sowie bei kontinuierlicher Arbeitsweise. Am Endpunkt der Reaktion ist das Reaktionsgemisch basisch, wie es dem Gehalt an freiem Amin und dessen Basenstärke entspricht.

Als saure Ionenaustauscher im erfindungsgemäßen Verfahren sind alle Stoffe geeignet, die in einem polymeren unlöslichen Grundgerüst bewegliche acide Wasserstoffatome besitzen.

Besonders geeignet als polymere Säuren sind im erfin-dungsgemäßen Verfahren Ionenaustauscherharze, die als polymere Basis ein Styrol/Divinylbenzol-Skelett besitzen, an das Sulfonsäure-Gruppen als saure Funktionen angeheftet sind.

Ebenfalls verwendbar als polymere Säuren sind im erfindungsgemäßen Verfahren Ionenaustauscherharze, die als polymeres Gerüst ein Polyacrylat-Skelett besitzen, an das Carbonsäure-Ankergruppen geheftet sind.

Die Aufarbeitung wird so vorgenommen, daß die Reaktionsmischung durch Filtration von beladenem Ionenaustauscher befreit wird und aus dem Filtrat das Lösungsmittel durch Destillation bei vermindertem Druck, beispielsweise bei 0,01 - 700 Torr (0,013-931 mbar), entfernt wird.

Die beladenen Ionenaus tauscherharze (neutrale Form) lassen sich nach bekannten Methoden regenerieren und erneut problemlos einsetzen. Alle so erhaltenen Polymerpolyetherpolyamine werden bei 0,01 bis 0,1 Torr (0,013-0,13 mbar) 60 bis 80°C von Spuren flüchtiger Bestandteile befreit.

Die erfindungsgemäß erhaltenen Polymer-polyetherpolyamine werden wegen ihres niedrigen Dampfdrucks vorzugsweise als Reaktionspartner für Polyisocyanate bei der Herstellung von gegebenenfalls zelligen Polyurethankunststoffen eingesetzt, wobei sie gegebenenfalls auch mit anderen niedermolekularen (Molekulargewicht: 32 bis 399) und/oder höhermolekularen (Molekulargewicht: 400 bis ca. 15 000) Verbindungen mit gegenüber Isocyanaten reaktiven Gruppen kombiniert werden können. Besonders geeignet sind sie für Hochfrequenzver-schweißbare Weichschaumkunststoffe auf Polyurethan-Basis.

Weitere Verwendungszwecke der erfindungsgemäß hergestellten Polyamine sind z.B. Kupplungskomponenten für Diazofarbstoffe, Härter für Epoxid- und Phenolharze sowie alle anderen an sich bekannten Reaktionen von Aminen wie Amid- oder Imidbildung etc.

Die Verwendung der erfindungsgemäß hergestellten 'Polymer-Polyetherpolyamine'' zur Herstellung von homogenen und/oder zellförmigen Polyurethan-Kunststoffen und Elastomeren oder -Schaumstoffen erfolgt zusammen mit den üblichen Ausgangsstoffen für die Polyurethane nach an sich bekannten Durchführungsverfahren (vgl. z.B. DE-OS 2 302 564, 2 432 764, 2 512 385, 2 513 815, 3 550 796, 2 550 797, 2 550 833, 2 550 860, 2 550 862 und 2 639 083).

Als Polyisocyanate A) finden dabei im wesentlichen auch die bereits vorstehend für die NCO-Präpolymerherstellung aufgeführten Verbindungen Verwendung. Weitere Beispiele sind aliphatische, cycloaliphatische, araliphatische, aromatische und heterocyclisch sowie gegebenenfalls weiter modifizierte Polyisocyanate, wie sie in der DE-OS 2 854 384 auf den Seiten 8 bis 11 ausführlich aufgeführt werden.

Als Polyolausgangskomponenten zur Herstellung der homogenen oder zellularen Polyurethankunststoffe und -Elastomere bzw. -Schaumstoffe, einschließlich Integralschaumstoffe, werden in üblicher Weise Verbindungen mit mindestens zwei gegenüber Isocyanaten reaktionsfähigen Wasserstoffatomen und einem Molekulargewicht in der Regel von 62 bis 10 000 in den Einzelkomponenten verwendet. In der überwiegenden Menge setzt man dabei vorzugsweise Hydroxylgruppen aufweisende Verbindungen insbesondere 2 bis 8 Hydroxylgruppen aufweisende höhermolekulare Verbindungen, speziell solche vom Molekulargewicht 400 bis 8000, vorzugsweise 600 bis 6000, ein. Dies sind z.B. 2, in der Regel 2 bis 8, vorzugsweise aber 2 bis 4, Hydroxylgruppen aufweisende Polyester, Polyether, Polythioether, Polyacetale, Polycarbonate und Polyesteramide oder deren Mischungen, wie sie für die Herstellung von homogenen und zellförmigen Polyurethanen an sich bekannt sind. Sie können mit weiteren niedermolekularen, polyfunktionellen Verbindungen wie vorzugsweise Polyolen, aber gegebenenfalls auch Polyaminen oder Polyhydraziden mit Molekulargewichten von etwa 62 bis 400 gemischt werden, um die Eigenschaften der Polyurethane zu modifizieren.

Die bevorzugt zur Anwendung kommenden, mindestens 2, in der Regel 2 bis 8, vorzugsweise 2 bis 3, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, oder durch Anlagerung dieser Epoxide, vorzugsweise von Ethylenoxid und Propylenoxid, (gegebenenfalls im Gemisch, z.B. im Verhältnis von 5:95 bis 95:5) oder nacheinander, an Startkomponenten mit reaktionsfähigen Wasserstoffatomen wie Wasser, Alkohole, Ammoniak oder Amine, z.B. Ethylenglykol, Propylenglykol-1,3 oder -1,2, Trimethylolpropan, Glycerin, Sorbit, 4,4'-Dihydroxydiphenylpropan, Anilin, Ethanolamin oder Ethylendiamin, hergestellt. Auch Sucrose-Polyester sowie auch Formit- oder Formosegestartete Polyether kommen in Frage. Vielfach sind solche Polyether bevorzugt, die überwiegend (bis zu 90 Gew.-% bezogen auf alle vorhandenen OH-Gruppen im Polyether) primäre OH-Gruppen aufweisen.

Als in Frage kommende Hydroxylgruppen aufweisende Polyester sind z.B. Umsetzungsprodukte von mehrwertigen, vorzugsweise zweiwertigen, und gegebenenfalls zusätzlich dreiwertigen Alkoholen mit mehrwertigen, vorzugsweise zweiwertigen, aliphatischen, cycloaliphatischen, aromatischen und/oder heterocyclischen Carbonsäuren. Beispiele sind: Adipinsäure, Sebacinsäure, Isophthalsäure, Trimellitsäure, Phthalsäureanhydrid, Hexahydrophthalsäureanhydrid, Tetrachlorphthalsäureanhydrid, Endomethylentetrahydrophthalsäureanhydrid, Fumarsäure, di- oder trimerisierte ungesättigte Fettsäuren, Terephthalsäuredimethylester und Terephthalsäure-bis-glykolester. Als mehrwertige Alkohole kommen z.B. Ethylenglykol, Propan-1,2-diol, Propan-1,3-diol, Butan-1,4-diol, Butan-2,3-diol, Hexan-1,6-diol, Oktan-1,8-diol, Neopentylglykol, 1,4-Bis-hydroxymethyl-cyclohexan, 2-Methyl-1,3-propandiol, Glycerin, Trimethylolpropan, Hexantriol-(1,2,6), Trimethylolethan, Pentaerythrit, Sorbit, Formit, Methylglycosid, ferner Di-, Tri-, Tetra- und höhere Polyethylenglykole, Propylenglykole sowie -butylenglykole in Frage. Auch Polyester aus Lactonen, z.B. $\varepsilon$-Caprolacton, oder aus Hydroxycarbonsäure, z.B. $\omega$-Hydroxycapronsäure, sind einsetzbar. Zur Erzielung flüssiger Polyesterpolyole werden vorzugsweise Mischungen aus mindestens 2 Polyolen oder mindestens 2 Carbonsäuren verwendet.

Eine ausführliche Aufzählung weiterer geeigneter Beispiele von Polyhydroxylverbindungen wird in der DE-OS 2 854 384 auf den Seiten 11 bis 21 gegeben.

Gegebenenfalls können als Reaktivkomponenten für die Polyolmischungen auch weitere Verbindungen mit mindestens zwei gegenüber Isocyanaten reaktionsfähigen Wasserstoffatomen und einem Molekulargewicht von 62 bis 400 verwendet werden. Auch in diesem Fall versteht man hierunter besonders Hydroxylgruppen, aber auch Aminogruppen und/oder Thiogruppen und/oder Carboxylgruppen und/oder Hydrazidendgruppen aufweisende Verbindungen, die als Kettenverlängerungsmittel oder Vernetzungsmittel bezeichnet werden. Diese Verbindungen weisen in der Regel 2 bis 8, vorzugsweise 2 bis 4, gegenüber Isocyanaten reaktionsfähige Wasserstoffatome, insbesondere Hydroxylgruppen, auf. Auch in diesem Fall können Mischungen verschiedener solcher Verbindungen mit einem Molekulargewicht von 62 bis 400 verwendet werden.

Als Beispiele für derartige Verbindungen seien genannt: Ethylenglykol, 1,2-Propan-diol, Butandiol-2,3, Butandiol-1,4, Neopentylglykol, 1,4-Bis-hydroxymethyl-cyclohexan, 2-Methyl-1,3-propandiol, Dibrombutendiol, Trimethylolpropan, Pentaerythrit, Chinit, Sorbit, Rizinusöl, Diethylenglykol, 4,4'-Dihydroxy-diphenylpropan, Di-hydroxyethyl-hydrochinon, aber auch Ethanolamin, Diethanolamin, N-Methyldiethanolamin, N-tert.-Butyl-di-(β-hydroxypropyl-amin), Triethanolamin und 3-Aminopropanol. Weitere Beispiele für derartige Verbindungen werden in der DE-OS 2 854 384 auf Seiten 20 bis 26 aufgeführt.

Ferner können gegebenenfalls gegenüber Isocyanaten monofunktionelle Verbindungen in Anteilen von 0,01 bis 10 Gew.-%, bezogen auf Polyurethanfeststoff, als sogenannte Kettenabbrecher verwendet werden, z.B. Monoamine wie Butvl oder Dibutylamin, Stearylamin, N-Methyl-stearylamin, Piperidin, Cyclohexylamin oder Monoalkohole wie Butanol, 2-Ethylhexanol, Ethylenglykolmonomethylether.

Katalysatoren der an sich bekannten Art können mitverwendet werden, z.B. tert.-Amine wie Triethylamin, n— Methylmorpholin, Tetramethylethylendiamin, 1,4-Diaza-bicyclo-(2,2,2)-octan, Bis-(dimethylaminoalkyl)-piperazine, Dimethylbenzylamin, 1,2-Dimethylimidazol, monound bicyclische Amidine, Bis-(dialkylaminoalkylether), sowie Amid-(vorzugsweise Formamid)-Gruppen aufweisenden tert.-Amine. Erfindungsgemäß werden besonders organische Metallverbindungen wie organische Zinn-II-Verbindungen als Katalysatoren verwendet. Als organische Zinnverbindungen kommen neben schwefelhaltigen Verbindungen wie Dioctyl-zinn-mercaptid vorzugsweise Zinn-(II)-Salze von Carbonsäuren wie Zinn-(II)-Acetat, Zinn-(II)-ethylhexoat und die Zinn(IV)-Verbindungen, z.B. Dibutylzinndichlorid, Dibutylzinndiacetat, Dibutylzinndilaurat oder Dibutylzinnmaleat in Betracht. Selbstverständlich können alle Katalysatoren als Gemische eingesetzt werden. Weitere Vertreter von verwendbaren Katalysatoren sowie Einzelheiten über die Wirkungsweise sind im Kunststoffhandbuch Band VII, herausgeg-eben von Vieweg und Höchtlen, Carl-Hanser-Verlag, München 1966, z.B. auf den Seiten 96 bis 102 beschrieben bzw. sind in der DE-OS 2 854 384 aufgeführt.

Als Hilfs- und Zusatzmittel können verwendet werden:

Anorganische oder organische Substanzen als Treibmittel, z.B. Methylenchlorid, Monofluortrichlormethan, Dichlordifluormethan, ferner Luft, $CO_2$ oder Stickoxide.

Oberflächenaktive Zusatzstoffe, wie Emulgator und Schaumstoffinitiatoren sowie Schaumstabilisatoren Reaktivverzögerer werden in üblicher Weise mitverwendet, ferner Zellregler der an sich bekannten Art wie Paraffine oder Fettalkohole oder Dimethylpolysiloxane, sowie Pigmente oder Farbstoffe und/oder Flammschutzmittel der an sich bekannten Art, ferner Stabilisatoren gegen Alterungs- und Witterungseinflüsse, Weichmacher, fungistatisch und/oder bakteriostatisch wirkende Substanzen, sowie Füllstoffe können mitverwendet werden. Einzelheiten zu diesen Zusatz- und Hilfsstoffen können der DE-OS 2 854 384 auf Seiten 26 bis 31 und den dort zitierten Literaturstellen entnommen werden.

Die Schaumstoffherstellung kann sowohl als Freischaum als auch als Formschaum in der üblichen Weise erfolgen. Selbstverständlich können die Schaumstoffe auch zur Blockverschäumung oder nach an sich bekannten Doppeltransportbandverfahren oder irgeneiner weiteren Variante der Schaumstofftechnik hergestellt werden.

Die Elastomerherstellung kann nach Gieß; Schleuderguß, oder Sprühverfahren in Hand- oder Maschinenmischung der Komponenten nach üblichen Verfahrensweisen erfolgen.

Die erfindungsgemäßen Polymer-Polyetheramine werden jedoch vorzugsweise mit weiteren höhermolekularen Polyolen vermischt und auf der 'Polyol''-Dosierungsseite eingesetzt. Sie ergeben im allgemeinen besonders thermobelastbare Produkte mit erhöhtem Modul und verbesserter Heißwasserbeständigkeit.

Die folgenden Beispiele dienen der Erläuterung des er-findungsgemäßen Verfahrens. Wenn nicht anders vermerkt sind Mengenangaben als Gewichtsteile bzw. als Gewichtsprozente zu verstehen.

## Beispiel 1

### 1.1 Herstellung des NCO-Präpolymers

Zu 106 g (0,61 mol) 2,4-Diisocyanatotoluol werden bei 80 bis 85°C 900 g eines Polymer-polyols innerhalb 90 Minuten zugetropft und 120 Minuten bei dieser Temperatur nachgerührt. Das eingesetzte Polymerpolyol ist difunktionell, hat eine OH-Zahl von 37 und eine Viskosität von 1400 mPas bei 25°C; sein Polymergehalt beträgt 34,6 %. Es wurde dadurch hergestellt, daß auf einen auf 1,2-Propylen-glykol gestarteten Polypropylenoxidether der OH-Zahl 56 ein Styrol/Acrylnitril-40:60-Copolymerisat gepfropft wurde.

### 1.2 Herstellung des Carbamats

Zu einer Lösung von 42,5 g KOH (0,76 mol, OH: NCO = 1,16) und 0,5 g Mersolat[R]-H (als Emulgator) in 150 ml Wasser wird eine Lösung des obigen NCO-Präpolymers, das einen NCO-Gehalt von 2,74 Gew.-% aufweist, in 800 ml Dioxan bei 10 bis 23° Innentemperatur innerhalb von 45 Minuten zugetropft. Bei dieser Temperatur wird 10 Minuten nachgerührt.

### 1.3 Herstellung des Amins

Zu obiger Reaktionsmischung werden 650 ml Lewatit[R] SPC 118 (Ionenaustauscher) zugegeben. Die nach Erwärmung auf 60°C zügige CO -Entwicklung ergibt nach 3 Stunden 14 1 C02 (theoretisch 14,6 l). Nach filtrativer Abtrennung des Ionenaustauschers wird das Filtrat bei 100°C/18 mbar und anschließend 100°C/ 0,8 mbar vom Lösungsmittel befreit. Es resultieren 870 g (88 % der Theorie) eines gelben Produkts.

## Produktcharakterisierung

Gew.-% NH$_2$ im Polymer-Polyetherpolyamin:
0,91 NT-Zahl: 36,55 (theoretischer Wert: 34)
Säurezahl: 2,1
Mo1.-Masse: 3300 (theoretischer Wert: 3296)
H$_2$0 (nach Karl Fischer): 0,29 %
Viskosität: > 300 Pas (viskoelastisch)  ·
+) durch dampfdruckosmometrische
Bestimmung in Toluol bestimmt.

Lewatit$^{(R)}$ SPC 118 (Bayer AG) ist ein stark
saurer Kationenaustauscher mit -SO$_3$H-Gruppen
in einer Styrol/Divinylbenzol-Matrix (DVB-Gehalt
18 %). Der makroporös-großporige Austauscher
mit einem Kornspektrum von 0,3 bis 1,5 mm hat
eine Totalkapazität von 1,4 bis 1,5 mval pro ml.

Es wurden in gleichartiger Durchführungsform
folgende Ionenaustauscherharze im Verfahren
des Beispiels eingesetzt, wobei das Polyamin in
vergleichbarer Ausbeute und Reinheit erhalten
wurde:

Lewatit SPC 108, SC 108, SC 104 und CNP 80.
Angaben zu diesen Ionenaustauschern finden
sich in den Schriften der Bayer AG, z.B. der unter
der Nummer OC/I 20 233 (Ausgabe vom 1.8.1979)
erschienenen Schrift.

## Beispiel 2

### 2.1 Herstellung des NCO-Präpolyniers

Zu 86 g (0,49 mol) 2,4-Diisocyanato-toluol
werden bei 80°C 1000 g eines Polymerpolyols in
180 Minuten zugetropft und 120 Minuten bei
dieser Temperatur nachgerührt.

Das obige Polymerpolyol ist trifunktionell, hat
eine OH-Zahl von 28 und eine Viskosität von 1900
mPas/25°C, sein Polymergehalt beträgt 20 %. Das
Polymer ist ein Styrol/Acrylnitril-40:60-Co-
polymerisat, das auf einen Trimethylolpropan-
gestarteten Polyether mit 83 % Propylenoxid und
17 % Ethylenoxid der OH-Zahl 35 radikalisch
gepfropft wurde.

### 2.2 Herstellung des Carbamats

Zu einer Lösung von 37 g (0,66 mol) KOH und
0,5 g Mersolat®-H in 150 ml Wasser wird eine
Lösung des obigen NCO-Präpolymers, das einen
NCO-Gehalt von 2,2 Gew.-% aufweist, in 600 ml
Dioxan bei 45 Minuten und 18 bis 20°
Innentemperatur zugetropft. Bei dieser
Temperatur wird 15 Minuten nachgerührt.

### 2.3 Herstellung des Amins

Zu obiger Reaktionsmischung werden 700 ml
Lewatit® SPC 118 schnell zugegeben. Nach
Erwärmung auf 60°C und Zugabe von 500 ml Dioxan erfolgt schnelle Freisetzung (80 Minuten)
von 11,2 1 CO$_2$ (theoretisch 12,75 l). Nach
filtrativer Abtrennung des Ionenaustauschers wird
das Solvens bei 100°C/17 mbar und 100°C/0,13
mbar destillativ entfernt. Es werden 899 g (85 %)
eines gelben Produktes mit salbenartiger
Konsistenz erhalten.

## Produkt-Daten

% NH$_2$ im Polymer-Polyetherpolyamin: 0,645
NH-Zahl: 25,8 (theoretisch 26,1)
Säure-Zahl: 0,9
Mol.-Masse: 6390 (theoretisch 6438)
H$_2$O nach Karl Fischer: 0,21 %

## Beispiel 3

### 3.1 Polymerpolyol-Herstellung

Das eingesetzte Polymerpolyol ist trifunktionell,
hat eine OH-Zahl von 42,3, einen Feststoffgehalt
(Polymerenanteil von 18,7 %) (14,8 % Acrylnitril,
3,9 % Styrol) und eine Viskosität von 2600 mPas
bei 20°C und wurde wie folgt hergestellt:

In einem 100 1 VA-Kessel mit Rührwerk,
Rückfluß-kühler, Gaseinleitungsrohr und einer
Vorrichtung für die Monomerzufuhr wurden 12 kg
eines auf Glycerin gestarteten
Polyoxypropylenethertriols mit 5 % endständig
angeordneten Polyoxyethylenblöcken und einer
OH-Zahl von 56 unter Stickstoff auf 120°C erhitzt.
Über eine Membrandosierpumpe wurde im Laufe
von 4 Stunden eine Mischung aus 36 kg des
beschriebenen Polyethertriols, 2,4 kg Styrol, 9,6
kg Acrylnitril und 120 g Azoisobutyronitril (1 %,
bezogen auf Monomere) eindosiert, wobei die
Temperatur ständig zwischen 120° und 125°C
gehalten wurde. Nach beendeter Zugabe wurde 3
Stunden lang bei 120°C nachgerührt und
anschließend Wasserstrahlvakuum angelegt und
im Laufe von 7 Stunden, zuletzt im Öl
pumpenvakuum von 0,8 mbar, alles Flüchtige
abdestilliert. Es wurden 950 g eines Destillats
kondensiert, das 88,2 % Acrylnitril und 11,5 %
Styrol enthielt. Daraus errechnen sich folgende
Kenndaten: Monomerumsatz 92,1 %, Acrylnitril
gebunden 14,8 %, Styrol gebunden 3,9 %,
Feststoffgehalt (Polymeranteil) 18,7 %.

### 3.2 NCO-Präpolymer-Darstellung

Zu 131,4 g (0,755 mol) 2,4-Diisocyanatotoluol
werden bei 80°C 1000 g eines Polymerpolyols
innerhalb 180 Minuten zugetropft und 120
Minuten bei dieser Temperatur nachgerührt. Das
NCO-Präpolymer besitzt einen NCO-Gehalt von
3,0 %.

## 3.3 Herstellung des Carbamats

Zu einer Lösung von 55 g (0,98 mol) KOH und 0,5 g Mersolat®-H in 150 ml Wasser wird eine Lösung des obigen Präpolymers in 750 ml Dioxan innerhalb 60 Minuten bei 20 bis 25°C Innentemperatur zugetropft und 15 Minuten nachgerührt.

## 3.4 Herstellung des Amins

Zu obiger Reaktionsmischung werden 1,2 1 Lewatit® SPC 118 innerhalb 5 Minuten zugegeben. Nach Erwärmung auf 60°C und Zugabe von 500 ml Dioxan erfolgt schnelle Freisetzung (45 Minuten) von 14,8 1 $CO^2$ (theoretisch 16,9 l). Nach Beendigung der Gasentwicklung wird der Ionenaustauscher abfiltriert und das Lösungsmittel bei 100°C/17 mbar und dann bei 100°C/0,14 mbar abdestilliert. Es werden 1070 g (93,5 % der Theorie) eines hellgelben Produktes mit salbenpastenartiger Beschaffenheit erhalten.

## Produkt-Daten

Gew.-% $NH_2$ im Polymer-polyetherpolyamin: 0,93
    NH-Zahl: 37,3
    Säurezahl: 0,2
    Mol.-Masse: 4550
    $H_2O$ (nach Karl Fischer): 0,1 %.

## Beispiel 4

### 4.1 Herstellung des NCO-Präpolymers

Zu 245 g (1,4 mol) 2,4-Diisocyanatotoluol werden bei 80°C 4000 g eines Polymerpolyols innerhalb 180 Minuten zugetropft und 180 Minuten bei dieser Temperatur gehalten. Das NCO-Präpolymer hat 1,8 % NCO. Das obige Polymerpolyol ist trifunktionell, hat eine OH-Zahl von 19,7 % eine Viskosität von 3800 mPas/20°C und einen Polymerisatgehalt von 28,6 %. Es wurde durch Aufpfropfen von 16,7 % Acrylnitril und 11,9 % Styrol auf einen Trimethylolpropangestarteten Polyether aus 87 % Ethylenoxid und 13 % Propylenoxid mit einer OH-Zahl von 28 erhalten.

### 4.2 Herstellung des Carbamats

Zu einer Lösung von 102 g (1,82 mol) KOH und 1,5 g Mersolat® H in 750 g Wasser wird eine Lösung des obigen Präpolymers in 5 1 Dioxan in 90 Minuten bei 20-25°C Innentemperatur zugetropft und 35 Minuten nachgerührt.

### 4.3 Herstellung des Amins

Zu obiger Reaktionsmischung werden 2,2 1 Lewatit® SPC 118 (feuchte Ware) innerhalb 5 Minuten zugegeben. Nach Erwärmung auf 60°C und Zugabe von 1 1 Methanol erfolgt schnell Freisetzung (30 Minuten) von 29,8 1 CO (theoretisch 31,4 l). Nach Beendigung der Gasentwicklung wird das Ionenaustauscherharz abfiltriert und das Lösungsmittel bei 100°C/0,13 mbar abdestilliert. Es werden 3,9 kg (90 %) eines gelben Produkts mit salben-pastenartiger Beschaffenheit erhalten.

## Produkt-Daten:

Gew.-% NH: 0,465
NH-Zahl: 18,6
Säure-Zahl: 0,01
Molmasse: 9000
$H_2O$ (Karl Fischer): 0,3

## Beispiel 5

### 5.1 Herstellung des NCO-Präpolyniers

Zu 130,5 g (0,75 mol) 2,4-Diisocyanatotoluol werden bei 80°C 2 kg eines Polymerpolyols in 150 Minuten zugetropft und 120 Minuten bei dieser Temperatur gehalten, bis der NCO-Gehalt 1,7 % betrug.
Das obige Polymerpolyol ist difunktionell, hat eine OH-Zahl von 21, eine Viskosität von 3800 mPas/20°C und einen polymeren Anteil von 24,8 % (12,5 % Acrylnitril, 12,3 % Styrol). Es wurde durch Aufpfropfen von Acrylnitril/Styrol auf einen auf 1,2-Propylen-glykol gestarteten Polyether mit 85 Gew.-% Propylenoxid und 15 Gew.-% Ethylenoxid der OH-Zahl 28 erhalten.

### 5.2 Herstellung des Carbamats

Zu einer Lösung von 54,6 g (0,98 mol) KOH und 2 g Mersolat®- H in 2 1 Wasser wird obiges, auf 75°C erwärmtes Präpolymer in 120 Minuten bei einer Innentemperatur von 25-30°C zugetropft und 35 Minuten nachgerührt. Dann werden 3 1 Methanol zugegeben.

### 5.3 Herstellung des Amins

Zu obiger Reaktionsmischung werden 1,2 1 Lewatit® SPC 118 (feuchte Ware) innerhalb 5 Minuten zugegeben. Die spontan nach Zugabe des Ionenaustauschers auftretende $CO_2$-Entwicklung wird durch Erwärmen auf 50°C vervollständigt. Innerhalb 60 Minuten werden 16,1 1 (96 %) $CO_2$

entwickelt. Nach Beendigung der $CO^2$ Entwicklung wird das Ionenaustauscherharz (beladene K+-Form) abfiltriert. Das Filtrat ergibt 2 Phasen, von denen die untere, Methanolphase bei 100°C/18 mbar und 100°C/0,15 mbar destillativ vom Solvens befreit wird.

Es werden 1950 g (94 %) eines gelben, salbenartigen Produkts erhalten.

Produkt-Daten: Gew.-% $NH_2$: 0,46
NH-Zahl: 18,4
Säurezahl: 0,05
Molmasse: 6000
$H_2O$ (Karl Fischer): 0,28 %

## Beispiel 6

### 6.1 Herstellung des NCO-Prepolymers

Zu 176 g (1,01 mol) 2,4-Diisocyanatotoluol werden bei 60°C 2000 g eines Polymerpolyols in 240 min. zugetropft und 240 min. bei dieser Temperatur gehalten.

Das obige Polymerpolyol ist trifunktionell, hat eine OH-Zahl von 28,3, einen Feststoffgehalt von 19,1 % (Acrylnitril: Methylmethacrylat = 48: 52) und eine Viskosität von 2640 mPas bei Raumtemperatur. Das zugrundeliegende Polyethertriol entsteht durch Anlagerung von Propylenoxid und Ethylenoxid an Trimethylolpropan und hat eine OH-Zahl von 35.

### 6.2 Herstellung des Carbamats

Zu einer Lösung von 221 g (3,94 mol) KOH und 1 g Mersolat [R]K in 1500 ml Wasser wird eine Lösung des obigen NCO-Präpolymers in 1 1 Dioxan bei 18-23°C Innentemperatur in 60 min. zugetropft. Bei dieser Temperatur wird 30 min. nachgerührt.

### 6.3 Terstellung des Amins

Zu obiger Reaktionsmischung werden 4,8 1 Lewatit[R] SPC 118 (feuchte Ware) innerhalb 15 min. zugegeben. Nach Erwärmung auf 60°C und Zugabe von 1,8 Methanol erfolgt zügige Freisetzung (38 min.) von 21 1 $CO_2$ (93 %). Nach Beendigung der Gasentwicklung wird das beladene Ionenaustauscherharz abfiltriert und das Lösungsmittel bei 100°C/ 18 mbar und dann bei 100°C/ 0,25 mbar abdestilliert. Es werden 2,04 kg (95 %) eines gelbstichigen, salbenartigen Materials mit folgenden Daten erhalten:

Gew.-% $NH_2$: 0,547
NT-Zahl: 21,9
Säure-Zahl: 0,01
$H_2O$ (Karl Fischer): 0,18 %

## Beispiel 7

Verwendung der erfindungsgemäßen Polymerpolyamine im Weich-Kaltschaum

7.1 Vergleichsbeispiel (Verwendung normaler Polyole)

### Rezeptur: Polyol-Komponenten-Mischung

75 Tle. Polyol 1
25 Tle. Polyol II
3,1 Tle. Wasser
1,0 Tl. Dabco 33 LV[R] (Aminkatalysator der Firma Air Products)
1,5 Tle. PU 3117 (Weichschaumkatalysator der BAYER AG)
0,4 Tle. KS 43 (Gemisch niedermolekularer alkylierter Siloxane als Schaumstabilisator) - Fa. BAYER Diisocyanat-Komponenten
80 Tle. Isocyanat III
20 Tle. Isocyanat IV
Polyol I: Auf Sorbit gestarteter Polypropylenpolyethylenglykolether mit einer OH-Zahl von 28
Polyol II: Auf 1,2-Propylenglykol gestarteter Polypropylenglykolether der OH-Zahl 48
Isocyanat III: Durch Phosgenierung des Umsetzungsproduktes von Anilin und Formaldehyd erhaltenes Isocyanatgemisch mit einem NCO-Wert von 32,5.
Isocyanat IV: Gemisch aus 65 % 2,4-Diisocyanatotoluol und 35 % 2,6-Diisocyanatotoluol mit einem NCO-Wert von 48,3 %.

107 Tle. der Komponente P werden mit 48,5 Tlen. der Komponente D mit einem hochtourigen Rührer vermischt (NCO-Index 90) und frei verschäumt. Es wird ein Schaum mit einer Rohdichte von 40 kg/m³ und einer Stauchhärte von 3,05 kPa erhalten (40 % Verformung).

7.2 Vergleichsversuch: (Verwendung von Polymer-Polyolen) Wird in der P-Komponente Polyol II gewichtsteil-mäßig vollständig durch das Polymerpolyol, wie es in Beispiel 1 zur Herstellung des Polymerpolyamins verwendet wurde, ersetzt und wird im übrigen wie oben verfahren, so wird ein Schaumstoff mit einer Rohdichte von 40 kg/m³ und einer Stauchhärte vom 4,0 kPa (40 % Verformung) erhalten.

7.3 Erfindungsgemäße Verwendung von Polymer-Polyaminen Wird in der P-Komponente Polyol II gewichtsteil-mäßig zur Hälfte durch das Polymer-Polyamin nach Beispiel 1 ersetzt und im übrigen wie oben verfahren, so wird bei einer Rohdichte von 40 kg/m³ eine erheblich verbesserte Stauchhärte von 8,83 kPa (40 % Verformung) erhalten.

**Patentansprüche**

1. Verfahren zur Herstellung von Urethangruppen enthaltenden Polymer - Polyether polyaminen auf Polyalkylenetherbasis, welche Polymerisate und/oder Copolymerisate ungesättigter Monomerer, sowie gegebenenfalls Tarnstoff- und/oder Biuret- und/oder Allophanat-Gruppen enthalten, durch Hydrolyse von endständige NCO-Gruppen aufweisenden Präpolymeren, dadurch gekennzeichnet, daß man

a) in einem ersten Schritt Urethangruppen-haltige NCO-Präpolymere, erhalten durch Reaktion von

α) zwei- oder mehrwertigen Polyalkylenetherpolyolen mit einem Molekulargewicht von 1000 bis 10 000, welche 1 bis 60 Gew.-% Polymerisate und/oder Copolymerisate ungesättigter Monomerer aufgepfropft enthalten

und gegebenenfalls Harnstoff-, Biuretund/oder Allophanatgruppen aufweisen, und gegebenenfalls

β) niedermolekularen Kettenverlängerungsmitteln vom Molekulargewicht 18 bis 400, mit

Ψ überschüssigen molaren Mengen an organischen Polyisocyanaten,

in wäßriger Dispersion, gegebenenfalls in Gegenwart inerter, mit Wasser mischbarer organischer Lösungsmittel, bei einer Temperatur von 0 bis 40°C durch Eintragen in ein alkalisches wäßriges Medium, wobei das Äquivalentverhältnis zwischen OH⊖-Gruppen und NCO-Gruppen größer 1,01:1 ist, in das entsprechende Carbamat überführt,

b) das Carbamat in einem zweiten Schritt durch Zusatz einer äquivalenten oder etwas überschüssigen Menge eines sauren Ionenaustauschers unter Abspaltung von Kohlendioxid in das Amin überführt und

c) das so erhaltene Urethangruppen-haltige Polymerpolyetherpolyamin aus dem Reaktionsgemisch auf an sich bekannte Weise abtrennt.

2. Verfahren nach Anspruch 1, dadurch gekennzeichnet, daß NCO-Präpolymere verwendet werden, welche aus di- oder trifunktionellen Polyalkylenetherpolyolen mit einem Molekulargewicht von 2000 bis 6000 und einem Gehalt von 5 bis 40 Gew.-% an Pfropfpolymerisaten und/oder -copolymerisaten ungesättigter Monomerer erhalten werden.

3. Verfahren nach Anspruch 1 und 2, dadurch gekennzeichnet, daß als Pfropfpolymerisate bzw. -copolymerisate solche auf Basis von Acrylnitril, Methacrylnitril, Styrol, α-Methylstyrol, Acrylsäurealkylestern und Methacrylsäurealkylestern verwendet werden.

4. Verfahren nach Anspruch 1 bis 3, dadurch gekennzeichnet, daß Pfropfcopolymerisate auf Basis Acrylnitril mit Styrol oder Methacrylsäuremethylester verwendet werden.

5. Verfahren nach Anspruch 1 bis 4, dadurch gekennzeichnet, daß man die NCO-Präpolymere mit einem Polyisocyanat im NCO/OH-Verhältnis von 1,5:1 bis 2,8:1 herstellt.

6. Verfahren nach Anspruch 1 bis 5, dadurch gekennzeichnet, daß man als Polyisocyanat ein durch Harnstoff- und/oder Biuret- und/oder Allophanat-Gruppen modifiziertes Polyisocyanat einsetzt.

7. Verfahren nach Anspruch 1 bis 6, dadurch gekennzeichnet, daß das alkalisch wäßrige Medium eine Alkalihydroxidlösung darstellt und ein OH⊖-Ionen/ NCO-Gruppenverhältnis von 1,01:1 bis 1,60:1 eingehalten wird.

8. Verfahren nach Anspruch 1 bis 7, dadurch gekennzeichnet, daß man pro Alkaliäquivalent 1,01 bis 2 Äquivalente von dem Ionenaustauscherharz entstammende Wasserstoffionen einsetzt.

9. Urethangruppen-haltige Polymer-Polyetherpolyamine auf Basis von Polyalkylenetherpolyol-resten mit einem Molekulargewicht von 1000 bis 10 000, einem Pfropf-Polymerisat- bzw. -Copolymerisatgehalt von 0,65 bis 59,3 Gew.-% und 0,11 bis 2,9 Gew.-% endständigen NH₂-Gruppen, die über die Reste organischer Polyisocyanate durch Urethangruppen an die Polyalkylenetherpolyolreste gebunden sind, herstellbar nach Anspruch 1.

10. Verwendung von Polymer-Polyetherpolyaminen nach Anspruch 1 bis 9 als Aufbaukomponente zur Herstellung von homogenen und/oder zellförmigen Polyurethan-Kunststoffen, -Elastomeren sowie -Schaumstoffen.

**Claims**

1. A process for the production of polyalkyleneetherbased, urethane-group-containing polymerpolyether polyamines containing polymers and/or copolymers of unsaturated monomers and, optionally, urea and/or biuret and/or allophanate groups by hydrolysis of NCO-terminated prepolymers, characterized in that

a) in a first step, urethane-group-reacting NCO-prepolymers obtained by reaction of

α) difunctional or higher polyalkylene ether polyols having a molecular weight of from 1000 to 10,000 which contain from 1 to 60% by weight of grafted-on polymers and/or copolymers of unsaturated monomers and which optionally contain urea, biuret and/or allophanate groups, and optionally

β) low molecular weight chain-extending agents having a molecular weight of from 18 to 400 with

γ) excess molar quantities of organic polyisocyanates, are converted into the corresponding carbamate in aqueous dispersion by introduction into an alkaline aqueous medium at a temperature of from 0 to 40°C, optionally in the presence of inert water-miscible organic solvents, the equivalent ratio between OH⊖-

groups and NCO-groups being greater than 1.01:1,

b) in a second step, the carbamate is converted into the amine by the addition of an equivalent or slightly excess quantity of an acidic ion exchanger with elimination of carbon dioxide and

c) the urethane-group-containing polymer-polyether polyamine thus obtained is separated off from the reaction mixture in known manner.

2. A process as claimed in Claim I, characterized in that the NCO-prepolymers used are obtained from difunctional or trifunctional polyalkylene ether polyols having a molecular weight of from 2000 to 6000 and a content of from 5 to 40% by weight of graft polymers and/or copolymers of unsaturated monomers.

3. A process as claimed in Claims 1 and 2, characterized in that the graft polymers or copolymers used are based on acrylonitrile, methacrylonitrile, styrene, $\alpha$-methylstyrene, acrylic acid alkylesters and methacrylic acid alkylesters.

4. A process as claimed in Claims 1 to 3, characterized in that graft copolymers based on acrylonitrile with styrene or methacrylic acid methylester are used.

5. A process as claimed in Claims 1 to 4, characterized in that the NCO-prepolymers are prepared with a polyisocyanate in an NCO/OH-ratio of from 1.5:1 to 2.8:1.

6. A process as claimed in Claims 1 to 5, characterized in that a polyisocyanate modified by urea and/or biuret and/or allophanate groups is used as the polyisocyanate.

7. A process as claimed in Claims 1 to 6, characterized in that the alkaline aqueous medium is an alkali hydroxide solution and an $OH^{\ominus}$-ion:NCO-group ratio of from 1.01:1 to 1.60:1 is maintained.

8. A process as claimed in Claims 1 to 7, characterized in that from 1.01 to 2 equivalents of the hydrogen ions emanating from the ion exchanger resin is/are used per equivalent of alkali.

9. Urethane-group-containing polymer-polyether polyamines based on polYalkylene ether polyol residues having a molecular weight of from 1000 to 10,000, a graft polymer or copolymer content of from 0.65 to 59.3% by weight and a content of from 0.11 to 2.9% by weight of terminal $NH_2$-groups which are attached to the polyalkylene ether polyol residues by urethane groups through the residues of organic polyisocyanates, obtainable by the process claimed in Claim I.

10. The use of the polymer-polyether polyamines claimed in Claims 1 to 9 as a synthesis component in the production of homogeneous and/or cellular polyurethane plastics, elastomers and foams.

## Revendications

1. Procédé de préparation de polyétherpolyamines polymères à base de polyalkylène-éthers et contenant des groupes uréthane, ainsi que des polymères et/ou des copolymères de monomères insaturés et éventuellement des groupes urée et/ou biuret et/ou allophanate, par hydrolyse de prépolymères comportant des groupes NCO terminaux, caractérisé en ce que:

a) dans une première étape, on transforme, en carbamate correspondant, des prépolymères de NCO contenant des groupes uréthane et obtenus par réaction

$\alpha$) de polyalkylène-éther-polyols bivalents ou polyvalents d'un poids moléculaire de 1.000 à 10.000, qui contiennent 1 à 60% en poids de polymères et/ou de copolymères de monomères insatures greffés et qui comportent éventuellement des groupes urée, biuret et/ou allophanate, et éventuellement

$\beta$) des agents d'allongement de chaîne d'un faible poids moléculaire de 18 à 400, avec

$\gamma$) des quantités molaires excédentaires de polyisocyanates organiques,

en dispersion aqueuse, éventuellement en présence de solvants organiques inertes miscibles à l'eau, à une température de 0 à 40°C,

par introduction dans un milieu alcalin aqueux, le rapport des équivalents entre les groupes $OH^{\ominus}$ et les groupes NCO étant supérieur à 1,01:1,

b) dans une deuxième étape, on transforme le carbamate en amine par addition d'une quantité équivalente ou quelque peu excédentaire d'un échangeur d'ions acide avec dissociation d'anhydride carbonique, et

c) on sépare la polyétherpolyamine polymère ainsi obtenue et contenant des groupes uréthane du mélange réactionnel de façon connue en soi.

2. Procédé selon la revendication 1, caractérisé en ce qu'on utilise des prépolymères de NCO que l'on obtient à partir de polyalkylène-étherpolyols difonctionnels ou trifonctionnels d'un poids moléculaire de 2.000 à 6.000 et contenant 5 à 40% en poids de polymères et/ou de copolymères greffés de monomères insaturés.

3. Procédé selon les revendications 1 et 2, caractérisé en ce que, comme polymères ou copolymères greffés, on utilise ceux à base d'acrylonitrile, de méthacrylonitrile, de styrène, d'$\alpha$-méthyl-styrène, d'esters alkyliques de l'acide acrylique et d'esters alkyliques de l'acide méthacrylique.

4. Procédé selon les revendications 1 à 3, caractérisé en ce qu'on utilise des copolymères greffés à base d'acrylonitrile avec du styrène ou l'ester méthylique d'acide méthacrylique.

5. Procédé selon les revendications 1 à 4, caractérisé en ce qu'on prépare les prépolymères de NCO avec un polyisocyanate dans le rapport NCO/OH de 1,5:1 à 2,8:1.

6. Procédé selon les revendications 1 à 5, caractérisé en ce que, comme polyisocyanate, on utilise un polyisocyanate modifié par des groupes urée et/ou biuret et/ou allophanate.

7. Procédé selon les revendications 1 à 6, caractérisé en ce que le milieu aqueux alcalin est une solution d'un hydroxyde alcalin, tandis que l'on maintient un rapport ions OH $\ominus$/groupes NCO de 1,01:1 à 1,60:1.

8. Procédé selon les revendications 1 à 7, caractérisé en ce que, par équivalent alcalin, on utilise 1,01 à 2 équivalents d'ions hydrogène provenant de la résine échangeuse d'ions.

9. Polyéther-polyamines polymères contenant des groupes uréthane et à base de radicaux de polyalkylène-éther-polyols ayant un poids moléculaire de 1.000 à 10.000, une teneur en polymère ou en copolymère greffé de 0,65 à 59,3% en poids, ainsi que 0,11 à 2,9% en poids de groupes $NH_2$ terminaux qui, via les radicaux de polyisocyanates organiques et à l'intervention de groupes uréthane, sont lies aux radicaux de polyalkylène-éther-polyols, ces polyéther-polyamines polymères pouvant être préparées conformément à la revendication 1.

10. Utilisation de polyéther-polyamines polymères selon les revendications 1 à 9 comme composant structural pour la fabrication de mousses, d'élastomères et de matières synthétiques de polyurethanes homogènes et/ou cellulaires.